# EUROPEAN PATENT APPLICATION

(11) **EP 3 182 379 A1**
(43) Date of publication of application: **21.06.2017**
(21) Application number: 16204365.7
(22) Date of filing: 15.12.2016
(51) Int. Cl.: G07B 15/06, G07B 15/02, G06Q 30/04, G06Q 20/32, H04W 4/24

(54) **AUTOMATIC PAYMENT SYSTEM FOR MOTOR VEHICLE ACCESS TO AN URBAN AND/OR NON-URBAN AREA AND CONTROL DEVICE FOR VEHICLES**

(30) Priority: 18.12.2015 ES 201531838
(71) Applicant: Euronica, SA, 2086 Luxembourg (ES)
(72) Inventor: PELASSA, PIERGIORGIO, 2086 LUXEMBOURG (LU)
(74) Representative: Isern-Jara, Nuria

(57) **Abstract**

Improvements to an automatic payment system for motor vehicle access to an urban and/or non-urban area and control device for vehicles, comprising a device (1) that has sensing means (2) located in the seats of the vehicle, a management unit (3) connected to the sensing means in order to receive the passenger presence signal and a data transmission unit (4) for transmitting the data captured by said sensing means when it receives an order coming from an external device (5), such that the payment facility receives a signal on the number of passengers present in the vehicle, and establishes a predetermined rate. It further includes a mobile application that may be downloaded onto a smartphone (7) or through an electronic device provided with a SIM card, the payment facility connecting to the mobile application, at the same time that the smartphone communicates with the data transmission unit, in such a way that the user of the smartphone or electronic device carries out the payment transaction through the smartphone or electronic device provided with a SIM card.

## Description

### OBJECT OF THE INVENTION

The present invention relates to improvements to an automatic payment system for motor vehicle access to an urban and/or non-urban area and control device for vehicles wherein a user can use a smartphone to carry out the payment.

### BACKGROUND OF THE INVENTION

For years it has been commonplace in urban or non-urban areas, on freeways, or inter-urban roads in general located near areas with a large population, for traffic jams to occur on weekdays, due to the increase in the car population. A first known solution is placing tollbooths at the entrance to cities or urban areas without taking into consideration the number of passengers present in each vehicle, such that it may discriminate against certain users.

There is the possibility of checking and counting passengers manually, but this requires a large staff and may involve more time, thereby negatively affecting flow.

This problem has been thoroughly solved by Spanish patent ES2,334,760, belonging to the same applicant.

Users today may pay this toll with coins, or via credit card with devices such as a Teletac, but other alternative payment systems that do not require the aforementioned methods are growing increasingly popular.

### DESCRIPTION OF THE INVENTION

The present invention has been developed with the aim of providing an improved system that constitutes a novelty within the field of application, and solves the disadvantages mentioned above while also contributing other additional advantages, which will become evident from the description provided below.

Therefore, an object of the present invention is to provide improvements to an automatic payment system for motor vehicle access to an urban and/or non-urban area and control device for vehicles, comprising a device that has at least one sensing means located in each one of the seats of the vehicle, a management unit connected to the sensing means for receiving the signal of the presence or absence of a person sitting in one of the vehicle seats in question, and a data transmission unit for transmitting the data captured by said sensing means when it receives an order and/or signal coming from an external device, such that when the vehicle enters a payment area, the payment facility of said area adapted to communicate with the data transmission unit provided in the vehicle receives a signal on the number of passengers sitting inside the vehicle, and afterward the payment facility establishes a predetermined rate based on the number of passengers, for example a given rate for one passenger and a special rate for three or more passengers inside each vehicle.

Specifically, the invention is characterized in that it includes a mobile application that may be downloaded onto a smartphone or through an electronic device provided with a SIM card, wherein the payment facility connects to the mobile application by means of a Bluetooth connection, via the Internet or the like (wireless), at the same time that the smartphone is in communication with the data transmission unit through the mobile application, in such a way that the user of the smartphone carries out the payment transaction according to the established rate in accordance with the number of passengers detected through the smartphone or electronic device provided with a SIM card.

Because of these characteristics, the payment may be made much faster since users do not need to use the machine available at the tollbooth, i.e. they do not need to put a credit card in the payment machine or carry out the payment with coins. As such, the invention has a positive effect on traffic flow.

Another advantage of this payment system by means of the mobile application is the fact that in inclement or cold weather conditions, users do not have to lower the window of the vehicle door, with its unpleasant effect of letting the cold, rain, etc. into the vehicle.

Other characteristics and advantages of the payment system, object of the present invention, will become clear in light of the description of a preferred, though non-exclusive, embodiment, which, by way of a non-limiting example, is illustrated in the accompanying drawings, wherein:

### BRIEF DESCRIPTION OF THE DRAWINGS

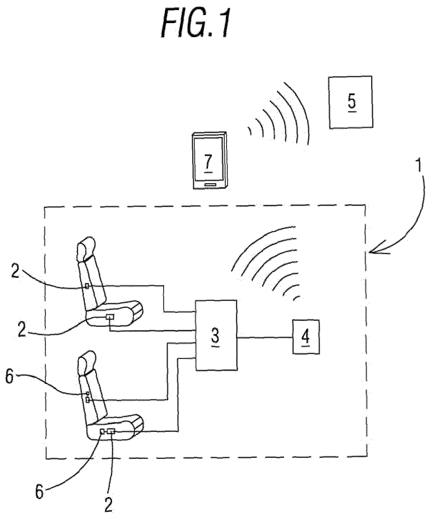

Figure 1. Shows a schematic view of payment system in accordance with the present invention.

### DESCRIPTION OF A PREFERRED EMBODIMENT

In view of the aforementioned figures and, in accordance with the numbering adopted, an example of a preferred embodiment of the invention can be observed therein, which comprises the parts and elements indicated and described in detail below.

With reference to the figure, the system intended for the payment of a toll in a fast-track for vehicles based on rates dependent on the number of users per vehicle comprises a device, indicated generally with reference (1), that has at least one sensing means (2) located in each one of the seats of the vehicle, a management unit (3) connected to the sensors for receiving the signal of the presence or absence of a person sitting in one of the vehicle seats in question and a data transmission unit (4) for transmitting the data captured by said sensing means when it receives an order and/or signal coming from an external device (5). Thus, when a vehicle enters a specific payment area (an urban region, a freeway, etc.), the payment facility of said area adapted to communicate with the data transmission unit (4) provided in the vehicle receives a signal on the number of passengers sitting inside the vehicle, and afterward the payment facility establishes one or more predetermined rates based on the number of passengers.

As for the management unit (3), it is made up of an electronics board that is mounted on a point of the vehicle or else may form an integral part of the electronic control unit of the vehicle itself.

Moreover, the invention includes a mobile application that may be downloaded onto a smartphone (7), wherein the payment facility connects to the mobile application by means of a Bluetooth connection, via the Internet, via wireless, or the like, at the same time that the smartphone is in communication with the data transmission unit through the mobile application, in such a way that the user of the smartphone carries out the payment transaction according to the established rate in accordance with the number of passengers detected through the smartphone (7).

There is the possibility that after making the payment through the application, the payment company may issue a response via text message confirming it has been paid, or including additional advertising messages.

Returning once more to the sensors (2) found in the vehicle, they are linked by means of electrical connections to the management unit (3), their arrangement being such that in the front seats of the vehicle they are located in an internal housing (not shown) of the back and base of the seat, while in the back seats of the vehicle three sensors are arranged in a row in the base of the seat, corresponding to the three areas envisaged for passengers.

In an alternative embodiment, the sensors (2) may be mounted in covers suited for vehicle seats, such that if such sensors are not arranged in the seats of the vehicle, the described payment system may be used by simply arranging these covers.

In order to prevent the sensors (2) from misinterpreting, the invention further includes a motion-discriminating device (6) of a known type (for which reason it will not be described in further detail from a structural and functional point of view) capable of rejecting motion caused by the vibrations of the engine or of the vehicle itself while operating, or by uneven terrain (potholes, speed bumps, etc.).

The details, shapes, dimensions and other accessory elements used in the invention may be suitably substituted for others which do not diverge from the scope defined by the claims included below.

## Claims

1. Improvements to an automatic payment system for motor vehicle access to an urban and/or non-urban area and control device for vehicles, comprising a device (1) that has at least one sensing means (2) located in each one of the seats of the vehicle, a management unit (3) connected to the sensing means for receiving the signal of the presence or absence of a person sitting in one of the vehicle seats in question, and a data transmission unit (4) for transmitting the data captured by said sensing means when it receives an order coming from an external device (5), such that when the vehicle enters a payment area, the payment facility of said area adapted to communicate with the data transmission unit (4) provided in the vehicle receives a signal on the number of passengers sitting inside the vehicle, and afterward the payment facility establishes a predetermined rate based on the number of passengers, **characterized in that** it includes a mobile application that may be downloaded onto a smartphone (7) or through an electronic device provided with a SIM card, wherein the payment facility connects to the mobile application by means of a Bluetooth connection, via the Internet, wireless, or the like, at the same time that the smartphone or electronic device provided with a SIM card is in communication with the data transmission unit through the mobile application, in such a way that the user of the smartphone or electronic device provided with a SIM card carries out the payment transaction according to the established rate in accordance with the number of passengers detected through the smartphone or electronic device provided with a SIM card.
